# EUROPÄISCHE PATENTANMELDUNG

(11) **EP 1 041 494 A2**
(43) Veröffentlichungstag der Anmeldung: **04.10.2000**
(21) Anmeldenummer: 00106205.8
(22) Anmeldetag: 22.03.2000
(51) Int. Cl.: G06F 17/30

(54) **Verfahren und Vorrichtung zur Anzeige von über ein Netzwerk übertragene Echtzeitvideoinformationen**

(30) Priorität: 27.03.1999 DE 19914077
(71) Anmelder: GRUNDIG Aktiengesellschaft, 90762 Fürth (DE)
(72) Erfinder: Kays, Ruediger, Dr., 90592 Schwarzenbruck (DE)

(57) **Zusammenfassung**

Die Erfindung beschreibt eine Verfahren und eine Vorrichtung zur Anzeige von über ein Netzwerk übertragene Echtzeitvideoinformationen auf einer Anzeigeeinheit. Die Echtzeitvideoinformationen werden auf der Anzeigeeinheit in einem Bildfenster eines Browsers dargestellt. Das Bildfenster wird einem Dokument in dem Browsers zugeordnet und über einen Hyperlink des Dokumentes im Browser gesteuert.

## Beschreibung

Die Erfindung betrifft ein Verfahren und eine Vorrichtung zur Anzeige von über ein Netzwerk übertragene Echtzeitvideoinformationen.

Aus 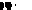 Multimedia Terminal als Endgerät", Funkschau 6/95, Seiten 70 ff ist ein Endgerät bekannt, welches drei Einheiten, nämlich einen modifizierten Multinorm-TV-Empfänger, einen integrierten Receiver/Decoder für den Empfang von DVB-Signalen und eine Multimedia-PC-Einheit umfaßt. Mittels dieses Gerätes können DVB-Signale ausgewertet und dargestellt werden. Im weiteren dient das Gerät als TV-Fernsehgerät und mittels der eingebauten Multimedia-PC-Einheit ist es möglich Internet-Funktionen auszuführen.

Aus EP-0723369A1 ist eine Vorrichtung bekannt, mittels welcher über ein Netzwerk Videotext-Informationen übertragen und von einem Terminal empfangen werden können. Es ist hieraus bekannt, einen Simultanempfang zu realisieren.

Nachteilig bei all dieses Erfindungen ist, daß eine konkrete Realisierung von Echtzeitvideoinformationsübertragung und ―darstellung auf einer Anzeigeeinheit nicht bekannt ist. Im weiteren setzen diese Erfindungen auf bereits bestehende Komponenten auf. Daher ergeben sich bei der Umsetzung neuer Konzepte technische Schwierigkeiten.

Aufgabe der Erfindung ist es daher, ein Verfahren und eine Vorrichtung zu benennen, welche auf einfache und für den Nutzer komfortable Weise einen Zugriff auf Echtzeitvideoinformationen über ein Netzwerk ermöglicht. Diese Aufgabe wird durch die Merkmale der Ansprüche 1 und 11 gelöst.

Weitere vorteilhafte Ausgestaltungen der Erfindung sind in den abhängigen Ansprüchen, sowie in der nachfolgenden Beschreibung, benannt.

Das Verfahren beschreibt die Darstellung bzw. Anzeige von Echtzeitvideoinformationen, welche über ein Netzwerk übertragen werden. Hierzu werden die Echtzeitvideoinformationen auf einer Anzeigeeinheit in einem Bildfenster eines Browsers dargestellt. Bei einem Browser handelt es sich um Software zur Darstellung von Seiten des World-Wide-Web. Das Bildfenster ist einem Dokument eines Browsers zugeordnet. Das Bildfenster wird hierbei durch einen Hyperlink des Dokumentes im Browser gesteuert. Die Verbindung zwischen den Echtzeitvideoinformationen und dem Bildfenster im Browser wird durch den Hyperlink gesteuert. Dies erfolgt, indem durch den Hyperlink auf die Adresse zur Quelle der Echtzeitvideoinformationen verwiesen wird. Der Browser springt diese Adresse an und stellt eine Verbindung zwischen den Echtzeitvideoinformationen und dem Bildfenster im Browser her. Die Echtzeitvideoinformationen werden im Bildfenster dargestellt. Bei dem Echtzeitvideoinformationen handelt es sich um analoge TV-Signale oder digitale Videodaten, insbesondere nach dem DVB-Standard, wobei es sich bei den digitalen Videodaten insbesondere um digitale Fernsehsignale handelt.
Die Position und Größe des Bildfensters auf der Anzeigeeinheit, sowie die Farbtiefe, Bildschärfe, Bildhelligheit, sowie die Lauststärke des mitübertragenen Tons, werden über den Hyperlink, bzw. über zu diesem abgelegte Daten bestimmt. Diese Daten können während der Darstellung der Echtzeitvideoinformationen verändert werden.

In einer vorteilhaften Ausgestaltung der Erfindung sind die Quellen der Echtzeitvideoinformationen Fernsehsender.

Im weiteren ist vorgesehen, daß neben den Echtzeitvideoinformationen Zusatzinformationen zu weiteren Programmen und/oder Sendern bzw. deren Inhalte übertragen werden. Diese Zusatzinformationen werden aufbereitet und können einem Benutzer zur Verfügung gestellt werden, damit dieser mittels dieser Zusatzinformationen eine Aufzeichnung von Echtzeitvideoinformationen auswählen und/oder anwählen kann.

Über den Hyperlink wird zugleich die Quelle der Echtzeitvideoinformationen benannt. Dies bedeutet, daß jedem Echtzeitvideoinformationsstrom im Netzwerk eine Quelle zugeordnet ist. Diese Quelle ist beispielsweise als der austrahlende Sender definiert, z.B. Deutschland_ARD_Hauptprogramm oder Italien_RAI_Unterprogramm_1.

Neben bzw. zusätzlich zu den Echtzeitvideoinformationen werden Zusatzinformationen übertragen. Diese Zusatzinformationen enthalten Informationen zu weiteren Programmen dieser Senderkette und/oder anderen Sendern und/oder über deren Inhalte sowie Übertragungsdaten. Diese Zusatzinformationen werden ausgewertet und aufbereitet.

Im weiteren wird die Erfindung anhand von einer Figur näher beschrieben.

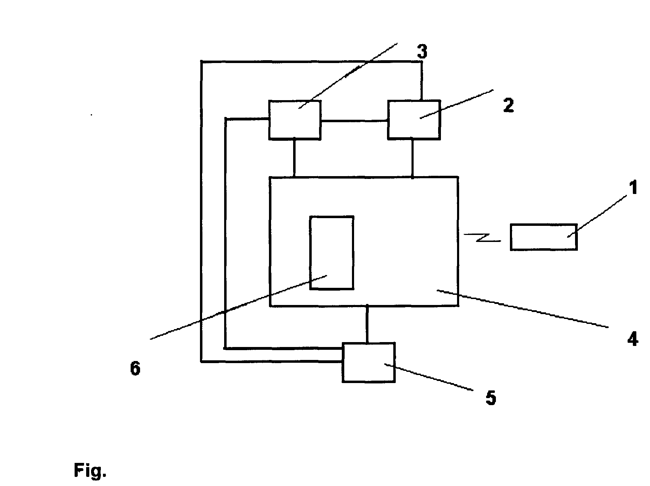

Die Figur zeigt einen schematischen Aufbau einer erfindungsgemäßen Vorrichtung. Diese Vorrichtung umfaßt einen Netzzugang 5, eine Steuereinheit 2, eine Grafikeinheit 3, eine Anzeigeeinheit 4 und eine

Eingabeeinheit 1, welche drahtgebunden oder drahtlos über Funk mit der Steuereinheit 2 kommuniziert. Auf der Anzeigeeinheit 4 werden bzw. können unterschiedliche Bildfenster 6 dargestellt werden. Ein Bildfenster 6 ist in der Größe und Form variabel.

Die Vorrichtung hat über den Netzzugang 5 Zugang zu mindestens einem Datennetz. Über dieses Datennetz werden Echtzeitvideoinformationen bereitgestellt. Bei diesem Datennetz kann es sich um jede Art von Netzwerk handeln.

Diese Echtzeitvideoinformationen werden auf der Anzeigeeinheit 4 dargestellt. Die Darstellung erfolgt in dem Bildfenster 6. Die Kommunikation zwischen der Anzeigeeinheit 4, insbesondere der Steuereinheit 2 und dem Netzwerk erfolgt über einen Browser. Dieser Browser wird von der Steuereinheit 2 gesteuert und verwaltet. Mittels des Browsers kann auf der Anzeigeeinheit 4 ein Bildfenster 6 erzeugt werden. In dieses Bildfenster 6 werden die Echtzeitvideodaten eingespielt und auf der Anzeigeeinheit 4 dargestellt. Um eine exakte Zuordnung zu erhalten, ist das Bildfenster 6 einem Dokument im Browser zugeordnet.
In einer vorteilhaften Ausgestaltung der Erfindung ist das Dokument als HTML-Dokument ausgestaltet. HTML steht für hyper text markup language.

Die Steuerung des Bildfensters 6 bezüglich der Echtzeitvideoinformationen erfolgt über einen Hyperlink. Bei einem Hyperlink handelt es sich um eine Adresse im World-Wide Web, welche in einem Dokument hinterlegt ist und auf ein anderes Dokument mit einer definierten Adresse verweist. Bei Aktivierung des Hyperlinks springt der Browser zu dem Dokument, welches mit der Adresse verbunden ist. Links sind Verbindungen von Internetprogrammen untereinander. Über den Hyperlink ist die Position und Größe des Bildfensters 6 auf der Anzeigeeinheit 4, sowie die Farbtiefe, Bildschärfe, Bildhelligheit und Lautstärke des mitübertragenen Tons bestimmt. Durch Aktivierung eines Hyperlinks wird die Größe des Bildfensters 6 auf der Anzeigeeinheit 4 initialisiert. Über die Eingabeeinheit 1 können diese Einstellungen verändert werden.

Die Verbindung zwischen den Echtzeitvideoinformationen und dem Bildfenster 6 wird durch den Hyperlink gesteuert.

Bei den Echtzeitvideoinformationen handelt es sich sowohl um analoge als auch digitale Daten. Insbesondere handelt es sich um digitale und/oder analoge Fernsehsignale, welche über das Netzwerk als Echtzeitvideodaten zur Verfügung gestellt werden. Über den Hyperlink wird zugleich die Quelle der Echtzeitvideoinformationen benannt. Dies bedeutet, daß jedem Echtzeitvideoinformationsstrom im Netzwerk eine Quelle zugeordnet ist. Diese Quelle ist beispielsweise als der austrahlende Sender definiert, z.B. Deutschland_ARD_Hauptprogramm oder Italien_RAI_Unterprogramm_1. Als weitere Quellen sind Service-Provider, Rundfunkanstalten oder andere Anbieter denkbar.

Neben bzw. zusätzlich zu den Echtzeitvideoinformationen werden Zusatzinformationen übertragen. Diese Zusatzinformationen enthalten Daten und Informationen zu weiteren Programmen dieser Senderkette und/oder anderen Sendern sowie über deren Inhalte und/oder Übertragungsdaten. Diese Zusatzinformationen werden von der Steuereinheit 2 ausgewertet und aufbereitet. Die Steuereinheit 2 zeigt über ein weiteres Bildfenster 6 einem Benutzer diese Informationen auf der Anzeigeeinheit (4) an. Mittels dieser Informationen kann ein Benutzer einen gewünschten Sender anwählen, oder aber Zusatzgeräte, wie beispielsweise einen Videorecorder, auf eine gewünschte Sendung, d.h. auf einen digitalen Echtzeitvideodatenstrom programmieren.
Im weiteren kann hierdurch eine elektronische Programmvorschau für den Benutzer erzeugt werden.

In einer weiteren vorteilhaften Ausgestaltung ist in der Vorrichtung ein TV-Tuner angeordnet. Die Steuereinheit 2 steuert diesen TV-Tuner an und ordnet unterschiedlichen Frequenzen unterschiedliche Programme zu. Die Steuereinheit 2 koppelt jedes dieser Senderprogramme an einen Hyperlink und speist diese in das Netzwerk ein. Der Nutzer kann nunmehr über die Programmvorschau den Tuner ansteuern und ein gewünschtes Programm auswählen.

## Patentansprüche

1. Verfahren zur Anzeige von über ein Netzwerk übertragenen Echtzeitvideoinformationen auf einer Anzeigeeinheit
**dadurch gekennzeichnet, daß**
die Echtzeitvideoinformationen auf der Anzeigeeinheit in einem Bildfenster eines Browsers dargestellt werden,
das Bildfenster einem Dokument in dem Browser zugeordnet wird und
das Bildfenster durch einen Hyperlink des Dokumentes im Browser gesteuert wird.

2. Verfahren nach Anspruch 1,
**dadurch gekennzeichnet, daß**
die Verbindung zwischen den Echtzeitvideoinformationen und dem Bildfenster im Browser durch den Hyperlink gesteuert wird.

3. Verfahren nach Anspruch 1 oder 2,
**dadurch gekennzeichnet, daß**
die Echtzeitvideoinformationen analoge TV-Signale oder digitale Videodaten sind.

4. Verfahren nach Anspruch 3,
**dadurch gekennzeichnet, daß**
die digitalen Videoinformationen digitale T\/-Signale, insbesondere nach dem DVB-Standard sind.

5. Verfahren nach einem oder mehreren der vorhergehenden Ansprüche,
**dadurch gekennzeichnet, daß**
durch die Aktivierung eines Hyperlink die Position und die Größe des Bildfensters auf der Anzeigeeinheit initialisiert wird.

6. Verfahren nach einem oder mehreren der vorhergehenden Ansprüche,
**dadurch gekennzeichnet, daß**
die Quellen der Echtzeitvideoinformationen durch den Hyperlink bestimmt werden.

7. Verfahren nach Anspruch 5,
**dadurch gekennzeichnet, daß**
die Quellen der Echtzeitvideoinformationen Fernsehsender und/oder Service-Provider und/oder Rundfunkanstalten sind.

8. Verfahren nach einem oder mehreren der vorhergehenden Ansprüche,
**dadurch gekennzeichnet, daß**
es sich bei den Dokumenten um HTML-Dokumente handelt.

9. Verfahren nach einem oder mehreren der vorhergehenden Ansprüche,
**dadurch gekennzeichnet, daß**
neben den Echtzeitvideoinformationen Zusatzinformationen zu weiteren Programmen und/oder Sendern bzw. deren Inhalte übertragen werden und diese Zusatzinformationen aufbereitet werden, einem Benutzer zur Verfügung gestellt werden und mittels dieser Informationen eine Aufzeichnung von Echtzeitvideoinformationen ausgewählt und vorbereitet werden kann.

10. Verfahren nach einem oder mehreren der vorhergehenden Ansprüche,
**dadurch gekennzeichnet, daß**
die Hyperlinks auf unterschiedliche Quellen der Echtzeitvideoinformationen in Dokumenten im Netzwerk hinterlegt werden und zusätzlich zu diesen Quellen individuelle Parameter hinterlegt werden.

11. Vorrichtung zur Durchführung des Verfahrens nach einem oder mehreren der vorhergehenden Ansprüche,
**dadurch gekennzeichnet, daß**
die Vorrichtung eine Anzeigeeinheit (4), eine Grafikeinheit (3), eine Steuereinheit (2), eine Eingabeeinheit (1) und einen Netzzugang (5) aufweist, wobei die Grafikeinheit (3) die Echtzeitvideoinformationen, welche über das Netzwerk übertragen werden, auf der Anzeigeeinheit (4) darstellt, die Steuereinheit (2) die Daten des Hyperlinks bezüglich Größe und Position des Bildfensters (6) auswertet und an die Grafikeinheit (2) weiterleitet, welche diese Daten zur Darstellung der Echtzeitvideoinformationen verwendet und über die Eingabeeinheit (1) die Position und Größe des Bildfensters (6) einstellbar ist.

12. Vorrichtung nach Anspruch 11,
**dadurch gekennzeichnet, daß**
mittels der Eingabeeinheit (1) die Darstellung im Bildfenster (6) beeinflußbar ist.

13. Vorrichtung nach Anspruch 11,
**dadurch gekennzeichnet, daß**
über die Eingabeeinheit (1) die Helligkeit, der Kontrast, die Farbtiefe einstellbar ist.

14. Vorrichtung nach Anspruch 11 oder 12,
**dadurch gekennzeichnet, daß**
die zu den Echtzeitvideoinformationen gehörigen Audioinformationen von der Eingabeeinheit (1) beeinflußbar sind.

15. Vorrichtung nach einem oder mehreren den vorhergehenden Ansprüche,
**dadurch gekennzeichnet, daß**
die Steuereinheit (2) die zu den Echtzeitvideoinformationen mitübertragenen Zusatzinformationen auswertet und aus diesen eine Programmvorschau erstellt und die Steuereinheit (2) mittels der Progammvorschau Echtzeitvideoinformationen auswählt und/oder aufzeichnet, wobei die Kriterien zur Auswahl von einem Benutzer über die Eingabeeinheit (2) bedarfsmäßig zusammenstellbar sind.

16. Vorrichtung nach einem oder mehreren den vorhergehenden Ansprüche,
**dadurch gekennzeichnet, daß**
die Steuereinheit (2) die Grafikeinheit (3) auf den Datenstrom der Echtzeitvideoinformationen synchronisiert.

17. Vorrichtung nach einem oder mehreren den vorhergehenden Ansprüche,
**dadurch gekennzeichnet, daß**
die Steuereinheit (2) einen TV-Tuner ansteuert und die von diesem empfangenen Fernsehsignale in einen Echtzeitvideoinformationsstrom umwandelt, mit einem Hyperlink versieht und an die Grafikeinheit (3) übergibt.

18. Vorrichtung nach einem oder mehreren den vorhergehenden Ansprüche,
**dadurch gekennzeichnet, daß**
die Eingabeeinheit (1) mit der Steuereinheit (2) über eine Funkstrecke kommuniziert.
